# EUROPÄISCHE PATENTSCHRIFT

(11) **EP 1 800 030 B1**
(45) Veröffentlichungstag und Bekanntmachung des Hinweises auf die Patenterteilung: **22.12.2010**
(21) Anmeldenummer: 05800916.8
(22) Anmeldetag: 08.10.2005
(51) Int. Cl.: F16J 15/32, F16C 33/78

(54) **DICHTUNGSANORDNUNG**
SEALING ARRANGEMENT
DISPOSITIF D'ETANCHEITE

(30) Priorität: 12.10.2004 DE 102004049550
(43) Veröffentlichungstag der Anmeldung: 27.06.2007
(73) Patentinhaber: Schaeffler Technologies GmbH & Co. KG, 91074 Herzogenaurach (DE)
(72) Erfinder: NIEBLING, Peter, 97688 Bad Kissingen (DE); MASUR, Ernst, 97508 Untereuerheim (DE); HEIM, Jens, 97493 Bergrheinfeld (DE)
(86) Internationale Anmeldenummer: PCT/DE2005/001803
(87) Internationale Veröffentlichungsnummer: WO 2006/039898

(56) Entgegenhaltungen:
- EP-A- 1 505 307
- US-A- 3 561 770
- US-A1- 2002 074 736
- US-A1- 2004 113 366
- US-B1- 6 688 605

## Beschreibung

### Gebiet der Erfindung

Die Erfindung betrifft eine Dichtungsanordnung mit wenigstens einer Dichtung sowie mit einem Schleuderring, wobei der Schleuderring mit einem ersten hohlzylindrischen Abschnitt, mit einem konzentrisch zu dem ersten Abschnitt angeordneten zweiten hohlzylindrischen Abschnitt in dem ersten Abschnitt sowie mit einem von dem ersten Abschnitt abgewinkelten scheibenförmigen Ringabschnitt versehen ist, und wobei der erste Abschnitt und der zweite Abschnitt miteinander einteilig verbunden sind und dabei an dem ersten Abschnitt wenigstens eine elastische Dichtlippe der Dichtung anliegt.

### Hintergrund der Erfindung

Eine derartige Dichtungsanordnung ist in DE 101 63 068 A1 beschrieben. Bei der Montage der Dichtung, d.h. beim Aufschieben der Dichtlippe auf den ersten Abschnitt, stülpt sich die Dichtlippe häufig aufgrund fehlender Zentrierung in die verkehrte Richtung um. Die Dichtfunktion der Dichtung ist somit teilweise aufgehoben bzw. nachteilig behindert.

Aus der US 6 688 605 B1 ist eine Lagerdichtung für eine Wasserpumpe für Kfz-Anwendungen bekannt. Die gelehrte Dichtung zeigt eine Mehrzahl von Radialrippen, die unter anderem auf hohlzylindrischen Abschnitten eines Schleuderringes anliegen. Axialdichtungen werden nicht vorgeschlagen.

Aus der US 3 561 770 A geht eine Dichtungsanordnung hervor, die für eine feststehende Welle mit rotierendem Gehäuse gedacht ist. Auf einem rotierenden, zylindrischen Teil ist eine doppelt gefalzte Hülse aufgesetzt, die Dichtflächen für Radialdichtungen bereitstellt.

Aus der US 2002/074736 A1 ist eine Dichtungsanordnung in Form einer Kassettendichtung bekannt, die eine von einem Trägerring getragene Dichtung (7) beinhaltet, die eine axiale Dichdippe (8a) und eine radiale Dichtlippe (8b) aufweist. Die radiale Dichtlippe ist zur dichtenden Auflage auf dem gedoppelten Teil des Schleuderringes (5) und die axiale Dichtlippe zur dichtenden Auflage auf dem radialen Abschnitt (15) des Schleuderringes vorgesehen.

Aus der US 2004/113366 A1 ist eine Dichtungsanordnung für eine Welle bekannt, die einen einfachen (ungedoppelten) Schleuderring mit einer Fase am Ende eines zylindrischen Abschnittes aufweist. Diese Fase soll etwaige Schäden an der Dichtlippe unterbinden.

### Zusammenfassung der Erfindung

Die Aufgabe der Erfindung ist es daher eine Dichtungsanordnung zu schaffen, mit der der vorgenannte Nachteil vermieden wird.

Diese Aufgabe ist nach dem kennzeichnen Teil des Gegenstandes des Anspruches 1 ist dadurch gelöst, dass radial zwischen dem ersten Abschnitt und dem zweiten Abschnitt ein Ringspalt ausgebildet ist. Der erste hohlzylindrische Abschnitt und der zweite hohlzylindrische Abschnitt bilden somit nicht mehr, wie im betrachteten Stand der Technik, eine Doppelung sondern sind radial zueinander beabstandet. Der Ringspalt, der im wesentlichen auch eine hohlzylindrische Form aufweist, macht es möglich, dass ein relativ großer Verbindungsabschnitt in der Form eines Hohlkegelstumpfes zwischen dem zweiten hohlzylindrischen Abschnitt und dem ersten hohlzylindrischen Abschnitt ausgebildet werden kann.

Dieser Verbindungsabschnitt dient in der Praxis als Zentrierabschnitt, auf dem die schließlich mit Vorspannung auf dem ersten Abschnitt sitzende Dichtlippe zunächst zentriert und langsam und stetig bis zu ihrem endgültigen Sitz elastisch nachgebend aufgeweitet wird. Die Wand des hohlkegelig ausgeführten Verbindungsabschnittes ist vorzugsweise mit einem Winkel 5° > α < 30° geneigt. Der Übergang von dem Verbindungsabschnitt zu dem zweiten Abschnitt ist bevorzugt außen verrundet, so dass das Auffädeln der Dichtlippe auf dem Verbindungsabschnitt zunächst erleichtert ist. Der Übergang ist beispielsweise mit einem Radius verrundet, der mindestens dem doppelten der radial kleinsten Wandstärke des Schleuderringes entspricht.

Der zweite Abschnitt ist für den Sitz des Schleuderringes auf einem stehenden oder rotierenden Maschinenteil vorgesehen. Ein derartiges Maschinenteil ist zum Beispiel eine Welle oder ein auf einer Welle sitzender Innenring eines Wälzlagers. Der Presssitz des zweiten Abschnittes auf dem Maschinenelement wird mit einer Überdeckung von vorzugsweise 0,05 bis 0,6 mm abgesichert.

Der Schleuderring ist bevorzugt aus einem metallischen Blech und beispielsweise durch Umformen hergestellt.

Nach einer Ausgestaltung der Erfindung ist der Schleuderring gleichzeitig Träger eines wechselseitig polarisierten magnetischen Encoders. Der Encoder ist zum Beispiel aus einem Elastomer gebildet, in das magnetisierbare Partikel integriert sind. Der Ringspalt, der üblicherweise ein Luftspalt ist, wird zur einen Seite axial durch den Verbindungsabschnitt begrenzt und mündet axial in die andere Richtung ins Freie. Für den Fall, dass an dem Schleuderring ein Encoder befestigt ist, kann der Ringspalt ganz oder teilweise mit dem Elastomer ausgefüllt sein.

Die Dichtung ist vorzugsweise armiert und weist in der Regel zwei Dichtlippen auf. Eine der Dichtlippen liegt radial gegen den ersten Abschnitt vorgespannt an. Die Überdeckung zwischen dem Innendurchmesser der radialen Dichtlippe und dem Außendurchmesser des ersten Abschnittes beträgt vorzugsweise 0,05 bis 0,6 mm. Die funktionswichtige Überdeckung ist aufgrund der radialen Trennung des zweiten Abschnittes von dem ersten Abschnitt durch den Ringspalt von den Verformungen aus dem Presssitz vorteilhaft nahezu unbeeinflusst. Der Schleuderring weist an den Dichtfläche mit Rauheitswerten der Oberfläche vorzugsweise bis Rₐmax von 0,25 auf.

Der Trägerring der Dichtung, vorzugsweise ein Winkelring, kann wahlweise aus magnetisierbaren aber auch aus nicht magnetisierbaren Blech gefertigt sein. Kassettendichtungen mit magnetisierten Encodern am Schleuderring werden häufig mit der Dichtung vormontiert und aufeinander gestapelt zur Montage in das entsprechende Wälzlager angeliefert. Durch die Verwendung eines Trägerringes aus nicht magnetisierbarem Metall, beispielsweise aus austenitischem Stahl, sind die Kassetteneinheiten in der Montage einfach voneinander zu trennen, ohne dass diese aufgrund des Magnetismus des Encoders aneinander haften und ungewollt demontiert werden. Die Erfindung wird nachfolgend anhand von Ausführungsbeispielen näher erläutert. Es zeigen:
- Figur 1: eine zu einer Einheit als Kassettendichtung vormontierte Dich- tungsanordnung in einem Längsschnitt längster Mittelachse der Dichtungsanordnung,
- Figur 2: ein Wälzlager mit einem weiteren Ausführungsbeispiel einer Dichtungsanordnung in einer längs der Rotationsachse des Wälzlagers geschnittenen Teilansicht.

### Beschreibung der Zeichnungen

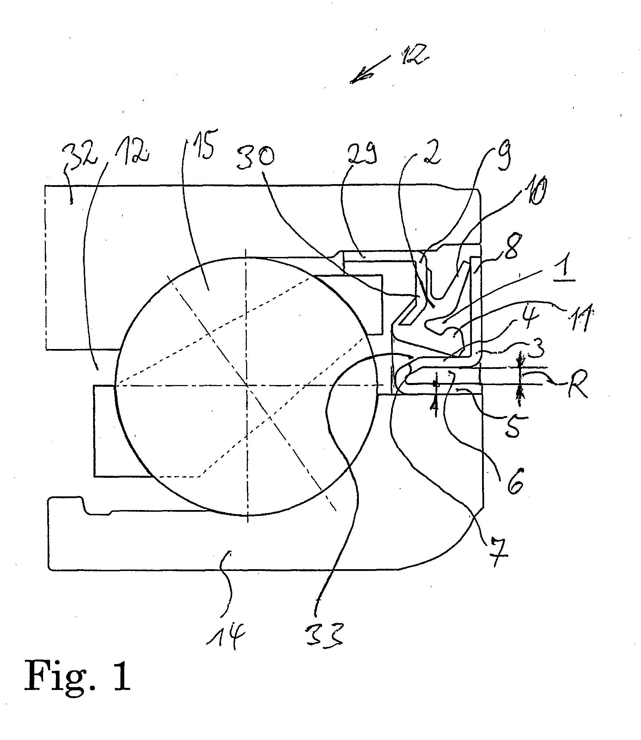

Figur 1 zeigt eine Dichtungsanordnung 1 in Form einer Kassettendichtung mit wenigstens einer Dichtung 2 und mit einem Schleuderring 3. Der Schleuderring 3 ist mit einem hohlzylindrischen ersten Abschnitt 4 versehen und umgreift umfangsseitig einen konzentrisch zu dem ersten Abschnitt 4 angeordneten hohlzylindrischen zweiten Abschnitt 5. Die Abschnitte 4, 5 sind durch einen Ringspalt 6 zueinander entfernt und einteilig durch den Verbindungsabschnitt 7 miteinander verbunden. Der Schleuderring 3 ist weiter mit einem scheibenförmigen Ringabschnitt 8 versehen, der rechtwinklig von dem ersten Abschnitt 4 abgeht.

Die Dichtung 2 ist aus einem Trägering 9 (Blech) mit den Ringschenkeln 29 und 30 und aus elastischem Material gebildet. Der Ringschenkel 29 weist in das Innere des Wälzlagers 12 und der Ringschenkel 30 ist mit seinem freien Ende leicht zu den Wälzkörpern 15 hin eingeknickt. Das elastische Material bildet zwei Dichtlippen 10 und 11. Die erste Dichtlippe 10 ist axial gegen den Ringabschnitt 8 vorgespannt. Die zweite Dichtlippe 11 liegt radial vorgespannt gegen den ersten Abschnitt 4 an. Der zweite Abschnitt 5 ist so umgebogen, dass er in den hohlkegelstumpfförmigen Verbindungsabschnitt 7 und somit einteilig in den ersten Abschnitt 4 übergeht. Die kleinste radiale Abmessung R des im wesentlichen hohlzylindrisch ausgebildeten Ringspaltes 6 ist mindestens genauso groß wie die größte radiale Wandstärke S eines der Abschnitte 4 oder 5. Der Verbindungsabschnitt 7 weist eine Schräge 33 auf, die mit einem Winkel von ca. 25° zu dem zweiten Abschnitt 5 geneigt ist.

Die Dichtungsanordnung 1 ist im Wälzlager 12 zwischen einem Innenring 14 und einem Außenring 32 angeordnet. Der Trägerring 9 der Dichtung 2 ist durch einen Presssitz des Ringschenkels 29 an dem Außenring 32 fest. Der Schleuderring 3 sitzt mittels eines Presssitzes des zweiten Abschnittes 5 auf dem Innenring14.

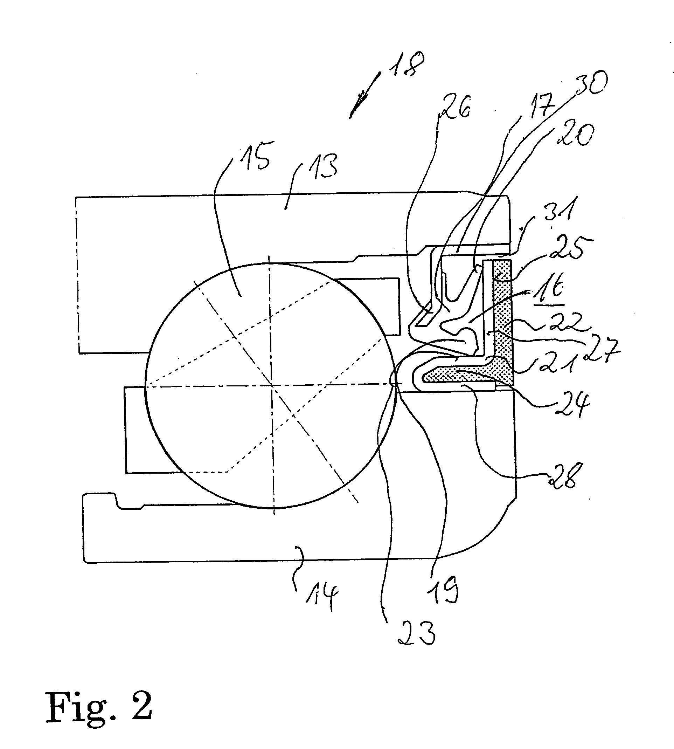

Figur 2 zeigt eine Dichtungsanordnung 16 in Form einer Kassettendichtung in einem Wälzlager 18 (in Form eines Radlagers) mit wenigstens einem Außenring 13, einem Innenring 14 und mindestens zwei Reihen Wälzkörpern 15. Die Dichtungsanordnung 16 dichtet das radial zwischen dem Innenring 14 und Außenring 15 gelegene Innere des Wälzlagers 18 nach außen ab. Die Dichtungsanordnung 16 weist eine Dichtung 17 mit den Dichtlippen 19, 20, einen Schleuderring 21 und einen Encoder 22 auf. Der Schleuderring 21 sitzt mit dem zweiten Abschnitt 28 auf dem Innenring 14. Der Encoder 22 ist an einer axial von der Dichtung 17 und von den Wälzkörpern 15 abgewandten Seite 25 der Dichtungsanordnung 16 auf den Schleuderring 21 aufvulkanisiert, mit magnetisierbaren Partikeln versetzt und in Umfangsrichtung des Encoders 22 wechselseitig magnetisch polarisiert. Der Ringspalt 24 ist mit dem elastischen Material des Encoders 22 zumindest teilweise ausgefüllt.

Die Dichtung 17 weist einen Trägerring 26 aus einem nicht ferromagnetischen Material auf. Der Trägerring 26 umgreift den Schleuderring 21 mittels des Schenkels 30 umfangsseitig, wobei zwischen dem Ringabschnitt 27 und dem Schenkel 30 des Trägerringes 26 radial ein Spalt 31 als Spaltdichtung ausgebildet ist. Die Dichtung 17 ist mittels eines Presssitzes des Schenkels 30 in dem Außenring 13 fest. Die radiale Dichtlippe 19 dichtet gegen den ersten Abschnitt 23 ab. Eine weitere Dichtlippe 20 ist axial gegen den Ringabschnitt 27 vorgespannt.

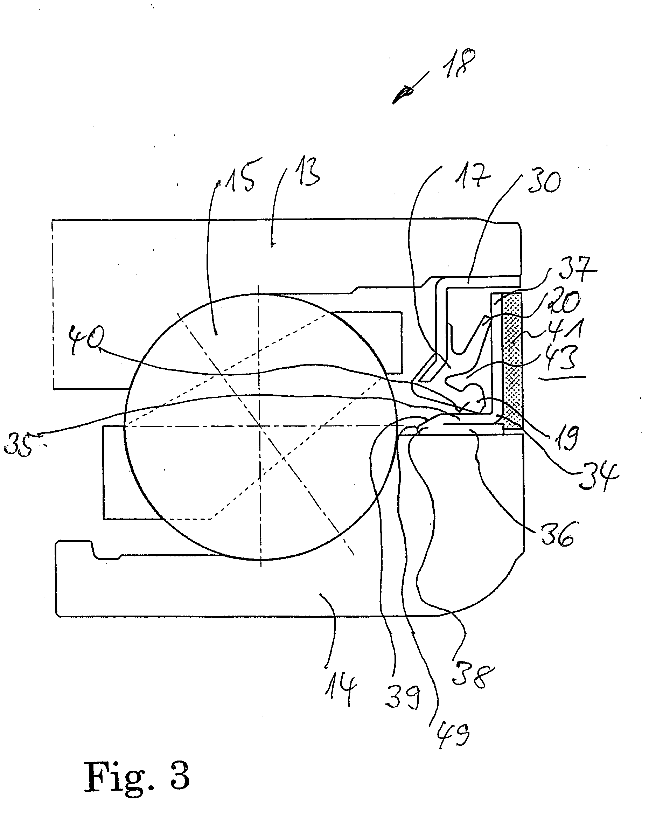

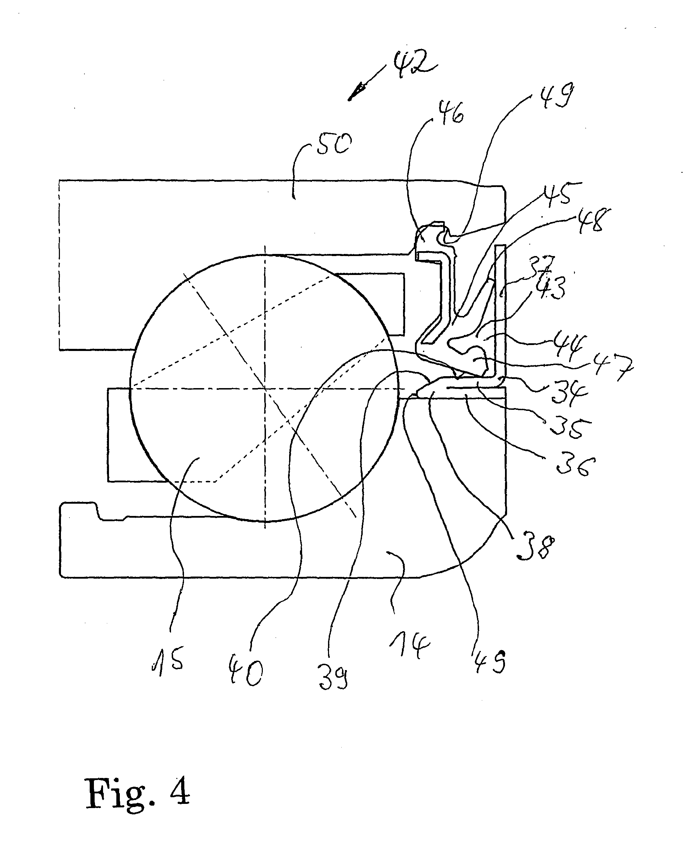

Figur 3 und Figur 4 zeigen Ausführungsförmen, die nicht von der Erfindung erfasst sind.

Figur 3 zeigt das Wälzlager 18 mit einer im Vergleich zur Dichtungsanordnung 16 nach Figur 2 modifizierten Dichtungsanordnung 43 in Form einer Kassettendichtung. Die Dichtung 17 liegt in diesem Fall mit den Dichtlippen 19 und 20 an einem Schleuderring 34 an. Auf den Schleuderring 34 der Dichtungsanordnung 43 ist an einer von den Wälzkörpern 15 axial abgewandten Seite ein Encoder 41 aufgeklebt.

Der Schleuderring 34, der auch Bestandteil der Dichtungsanordnung 44 nach Figur 4 ist, weist einen ersten hohlzylindrischer Abschnitt 35 , einen konzentrisch zu dem ersten Abschnitt 35 angeordneten zweiten hohlzylindrischen Abschnitt 36 in dem ersten Abschnitt 35 sowie einen von dem ersten Abschnitt 35 abgewinkelten scheibenförmigen Ringabschnitt 37 auf. Der erste Abschnitt 35 und der zweite Abschnitt 36 liegen radial umfangsseitig zu einer Doppelung des Bleches des Schleuderringes 34 aneinander und gehen an einem von dem Ringabschnitt 37 axial wegweisenden Ende 38 der Doppelung einteilig aus dem Blech ineinander übergehen.

Der Schleuderring 34 nach den Darstellungen der Figuren 3 und 4 weist eine kalt geformte Fase 39 auf. Die Kontur der Fase 39 geht von der radial nach außen gerichteten zylindrischen Außenmantelfläche 40 des ersten Abschnittes 35 aus und fällt zu dem Ende 38 hin geneigt ab. Die Mantelfläche der Fase 39 gibt die Außenmantelfläche eines Kegelstumpfes wieder. Der Fase 39 geht an dem Ende 38 in eine verrundeten Kante 49 über.

Figur 4 zeigt ein Wälzlager 42 mit einer Dichtungsanordnung 44, bei der die Dichtung 45 mittels eines Ringwulstes 46 aus dem Elastomer der elastischen Dichtlippen 47 und 48 in einer Ringnut 49 des Außenringes 50 sitzt. Eine derartige Anordnung ist von Vorteil, da eine Ringnut in der Form der Ringnut 49 oft kostengünstiger eingebracht in einen Außenring werden kann, als ein Presspasssitz für Schenkel von Kassettendichtungen, wie für die Schenkel 29 bzw. 30, geschliffen werden kann. Die Dichtung 45 und der Schleuderring 34 werden im Gegensatz zu den Dichtungsanordnungen 1, 16, und 43, die als Kassettendichtungen zu Baueinheiten vormontiert gemeinsam in die Wälzlager 12 bzw. 18 eingesetzt werden, als Einzelteile montiert. Dabei wird zunächst die Dichtung 45 in den Außenring 50 eingesetzt und dann der Schleuderring 34 auf den Innenring 14 aufgepresst. Das üblicherweise erschwerte Zentrieren der Dichtlippe auf einem Schleuderblech nach dem Stand der Technik ist besonders erschwert. Deshalb ist die Fase 39 in diesem Fall von besonderer Bedeutung, da diese ein exaktes Zentrieren ohne ungewolltes Umstülpen der Dichtlippe 47 absichert.

### Bezugszeichen

- 1: Dichtungsanordnung
- 2: Dichtung
- 3: Schleuderring
- 4: erster Abschnitt
- 5: zweiter Abschnitt
- 6: Ringspalt
- 7: Verbindungsabschnitt
- 8: Ringabschnitt
- 9: Trägerring
- 10: Dichtlippe
- 11: Dichtlippe
- 12: Wälzlager
- 13: Außenring
- 14: Innenring
- 15: Wälzkörper
- 16: Dichtungsanordnung
- 17: Dichtung
- 18: Wälzlager
- 19: Dichtlippe
- 20: Dichtlippe
- 21: Schleuderring
- 22: Encoder
- 23: erster Abschnitt
- 24: Ringspalt
- 25: Seite
- 26: Trägerring
- 27: Ringabschnitt
- 28: zweiter Abschnitt
- 29: Ringschenkel
- 30: Ringschenkel
- 31: Spalt
- 32: Außenring
- 33: Schräge
- 34: Schleuderring
- 35: erster Abschnitt
- 36: zweiter Abschnitt
- 37: Ringabschnitt
- 38: Ende
- 39: Fase
- 40: Außenmantelfläche
- 41: Encoder
- 42: Wälzlager
- 43: Dichtungsanordnung
- 44: Dichtungsanordnung
- 45: Dichtung
- 46: Ringwulst
- 47: Dichtlippe
- 48: Dichtlippe
- 49: Kante
- 50: Außenring

## Patentansprüche

1. Dichtungsanordnung (1, 16) mit wenigstens einer Dichtung (2, 17) sowie mit einem Schleuderring (3, 21), wobei der Schleuderring (3, 21) mit einem ersten hohlzylindrischer Abschnitt, mit einem konzentrisch zu dem ersten Abschnitt (4, 23) angeordneten zweiten hohlzylindrischen Abschnitt (5, 28) in dem ersten Abschnitt (4, 23) sowie mit einem von dem ersten Abschnitt (4, 23) abgewinkelten scheibenförmigen Ringabschnitt (8, 27) versehen ist, und wobei der erste Abschnitt (4, 23) und der zweite Abschnitt (8,27) miteinander einteilig an dem Schleuderring ausgebildet sind und dabei an dem ersten Abschnitt (4, 23) wenigstens eine elastische Dichtlippe (11, 19) der Dichtung (2, 17) anliegt; **dadurch gekennzeichnet, dass** radial zwischen dem ersten Abschnitt (4, 23) und dem zweiten Abschnitt (5,28) ein Ringspalt (6, 24) ausgebildet ist, und
der erste Abschnitt (4, 23) an einem Verbindungsabschnitt (7) in der Form eines Hohlkegelstumpfes in den zweiten Abschnitt (5,28) übergeht, wobei der Verbindungsabschnitt (7) sich dem ersten Abschnitt (4, 23) axial von dem Ringabschnitt (8,27) entfernt anschließt.

2. Dichtungsanordnung nach Anspruch 1, **dadurch gekennzeichnet, dass** die radial kleinste Abmessung des Ringspaltes (6, 24) mindestens genauso groß ist, wie die größte radiale Wandstärke eines der Abschnitte ( 4, 5, 23, 28).

3. Dichtungsanordnung nach Anspruch 2, **dadurch gekennzeichnet, dass** ein Übergang von dem Verbindungsabschnitt (7) zu dem zweiten Abschnitt (5,28) außen verrundet ist.

4. Dichtungsanordnung nach Anspruch 1, **dadurch gekennzeichnet, dass** der zweite Abschnitt (5,28) auf einem rotierenden Maschinenteil angeordnet ist.

5. Dichtungsanordnung nach Anspruch 1, **dadurch gekennzeichnet, dass** der zweite Abschnitt (5,28) auf einem Innenring (14) eines Wälzlagers (12) angeordnet ist.

6. Dichtungsanordnung nach Anspruch 1, **dadurch gekennzeichnet, dass** der Schleuderring (3, 21) aus einem metallischen Blech ist.

7. Wälzlager (12,18) mit einer Dichtungsanordnung nach Anspruch 1 **dadurch gekennzeichnet, dass** an dem Ringabschnitt (8, 27) an einer von der Dichtung (2, 17) abgewandten Seite ein umfangsseitig sowie dabei wechselseitig polarisierter magnetischer Encoder (22) fest ist.

8. Wälzlager (12,18) mit einer Dichtungsanordnung nach Anspruch 1 **dadurch gekennzeichnet, dass** die Dichtung (2, 17) in einem Außenring (13) des Wälzlager (12, 18) angeordnet ist.

9. Wälzlager (12,18) mit einer Dichtungsanordnung nach Anspruch 1 **dadurch gekennzeichnet, dass** die Dichtung (2, 17) an einem Trägerring (9, 26) fest ist.

10. Wälzlager nach Anspruch 19, **dadurch gekennzeichnet, dass** der Trägerring (9, 26) zwei zueinander abgewinkelte Ringschenkel (29, 30) aufweist.

11. Wälzlager nach Anspruch 9 oder 10, **dadurch gekennzeichnet, dass** der Trägerring (9, 26) nicht ferromagnetischmetallisch ist

## Claims

1. Sealing arrangement (1, 16) with at least one seal (2, 17) and with a spinning ring (3, 21), the spinning ring (3, 21) being provided with a first hollow-cylindrical portion, with a second hollow-cylindrical portion (5, 28), arranged concentrically to the first portion (4, 23), in the first portion (4, 23), and with a disk-shaped annular portion (8, 27) angled from the first portion (4, 23), and the first portion (4, 23) and the second portion (8, 27) being formed in one piece with one another on the spinning ring, and in this case at least one elastic sealing lip (11, 19) of the seal (2, 17) bearing against the first portion (4, 23), **characterized in that** an annular gap (6, 24) is formed radially between the first portion (4, 23) and the second portion (5, 28), and the first portion (4, 23) merges into the second portion (5, 28) at a connecting portion (7) in the form of a hollow cone frustum, the connecting portion (7) adjoining the first portion (4, 23) axially at a distance from the annular portion (8, 27).

2. Sealing arrangement according to Claim 1, **characterized in that** the radially smallest dimension of the annular gap (6, 24) is at least exactly as large as the largest radial wall thickness of one of the portions (4, 5, 23, 28).

3. Sealing arrangement according to Claim 2, **characterized in that** a transition from the connecting portion (7) to the second portion (5, 28) is rounded on the outside.

4. Sealing arrangement according to Claim 1, **characterized in that** the second portion (5, 28) is arranged on a rotating machine part.

5. Sealing arrangement according to Claim 1, **characterized in that** the second portion (5, 28) is arranged on an inner ring (14) of a rolling bearing (12).

6. Sealing arrangement according to claim 1, **characterized in that** the spinning ring (3, 21) is formed from a metal sheet.

7. Rolling bearing (12, 18) having a sealing arrangement according to Claim 1, **characterized in that** a circumferentially and in this case alternatively polarized magnetic encoder (22) is firm against the annular portion (8, 27) on a side facing away from the seal (2, 17).

8. Rolling bearing (12, 18) having a sealing arrangement according to Claim 1, **characterized in that** the seal (2, 17) is arranged in an outer ring (13) of the rolling bearing (12, 18).

9. Rolling bearing (12, 18) having a sealing arrangement according to Claim 1, **characterized in that** the seal (2, 17) is firm against a carrier ring (9, 26).

10. Rolling bearing according to Claim 9, **characterized in that** the carrier ring (9, 26) has two ring legs (29, 30) angled with respect to one another.

11. Rolling bearing according to Claim 9 or 10, **characterized in that** the carrier ring (9, 26) is nonferromagnetically metallic.

## Revendications

1. Dispositif d'étanchéité (1, 16) avec au moins un joint d'étanchéité (2, 17) ainsi qu'une bague centrifuge (3, 21), la bague centrifuge (3, 21) étant pourvue d'un premier segment cylindrique creux, d'un deuxième segment cylindrique creux (5, 28) disposé de façon concentrique par rapport au premier segment (4, 23) dans le premier segment (4, 23) ainsi que d'un segment annulaire (8, 27) en forme de disque coudé à partir du premier segment (4, 23) et le premier segment (4, 23) et le deuxième segment (8,27) étant réalisés ensemble d'un seul tenant au niveau de la bague centrifuge et au moins une lèvre étanche (11, 19) élastique du joint d'étanchéité (2, 17) reposant donc au niveau du premier segment (4, 23), une fente annulaire (6, 24) étant réalisée de façon radiale entre le premier segment (4, 23) et le deuxième segment (5, 28) et le premier segment (4, 23) se transformant au niveau d'un segment de liaison (7) prenant la forme d'un tronc conique creux en un deuxième segment (5, 28), le segment de liaison (7) se raccordant au premier segment (4, 23) axialement à une certaine distance du segment annulaire.

2. Dispositif d'étanchéité selon la revendication 1, **caractérisé en ce que** la plus petite dimension radiale de la fente annulaire (6, 24) est au moins aussi grande que la plus grande épaisseur de paroi radiale d'un des segments (4, 5, 23, 28).

3. Dispositif d'étanchéité selon la revendication 2, **caractérisé en ce qu'**une transition du segment de liaison (7) au deuxième segment (5, 28) est arrondie à l'extérieur.

4. Dispositif d'étanchéité selon la revendication 1, **caractérisé en ce que** le deuxième segment (5, 28) est disposé sur une pièce de machine tournante.

5. Dispositif d'étanchéité selon la revendication 1, **caractérisé en ce que** le deuxième segment (5, 28) est disposé sur une bague intérieure (14) d'un palier à roulement (12).

6. Dispositif d'étanchéité selon la revendication 1, **caractérisé en ce que** la bague centrifuge (3, 21) est fabriquée à partir d'une tôle métallique.

7. Palier à roulement (12, 18) avec un dispositif d'étanchéité selon la revendication 1, **caractérisé en ce qu'**un codeur magnétique (22) polarisé côté périphérique ainsi que côté alternatif est fixé au segment annulaire (8, 27) au niveau d'un côté opposé au joint d'étanchéité (2, 17).

8. Palier à roulement (12, 18) avec un dispositif d'étanchéité selon la revendication 1, **caractérisé en ce que** le joint d'étanchéité (2, 17) est disposé dans une bague extérieure (13) du palier à roulement (12, 18).

9. Palier à roulement (12, 18) avec un dispositif d'étanchéité selon la revendication 1, **caractérisé en ce que** le joint d'étanchéité (2, 17) est fixé à une bague de support (9, 26).

10. Palier à roulement selon la revendication 9, **caractérisé en ce que** la bague de support (9, 26) comporte deux bords de bague (29, 30) coudés de façon opposée l'un par rapport à l'autre.

11. Palier à roulement selon la revendication 9 ou 10, **caractérisé en ce que** la bague de support (9, 26) n'est pas réalisée en métal ferromagnétique.
